# EUROPEAN PATENT APPLICATION

(11) **EP 2 595 045 A2**
(43) Date of publication of application: **22.05.2013**
(21) Application number: 12174720.8
(22) Date of filing: 03.07.2012
(51) Int. Cl.: G06F 3/0488

(54) **Display apparatus and control method thereof**

(30) Priority: 17.11.2011 KR 20110120043
(71) Applicant: Samsung Electronics Co., Ltd., Suwon-si, Gyeonggi-do, 443-742 (KR)
(72) Inventor: Kwon, Jin, Seoul (KR); Lee, Yong-joo, Seoul (KR); Choi, Jin-ho, Seoul (KR); Hyun, Jae-hun, Seoul (KR); Hong, Seok-won, Seoul (KR)
(74) Representative: Hewett, Jonathan Michael Richard

(57) **Abstract**

A display apparatus includes: an image processing unit which processes an image signal; a display unit which displays a picture or an image based on the image signal; a user input unit which includes a touch pad to receive a touch input from a user; and a controller which, according to a user's first touch input received in one of four edge regions of the touch pad corresponding to four edge regions of the picture, respectively, displays, on the picture, a first UI of a function of a category corresponding to the edge region in which the user's first touch input is received, of function categories allocated for the four edge regions of the picture, and performs the function according to the user's first touch input.

## Description

The present invention relates to a display apparatus which is capable of providing an interface which allows a user to use functions of the display apparatus more conveniently, and a control method thereof.

In recent years, as a display apparatus such as a television (TV) has provided a variety of functions such as multimedia, Internet browsing and so on, in addition to TV broadcasting, a user interface which allows a user to use such functions more conveniently has been researched and developed.

However, diversified and complicated functions of the display apparatus leads to a complicated user input unit, such as a remote controller, of the display apparatus, which in turn results in a user having difficulty operating the remote controller.

Accordingly, one or more exemplary embodiments of the present invention provide a display apparatus which is capable of providing an interface to allow a user to use functions of the display apparatus more conveniently, and a control method thereof.

The foregoing and/or other aspects may be achieved by providing a display apparatus including: an image processing unit which processes an image signal; a display unit which displays an image on a screen based on the image signal; a user input unit which includes a touch pad to receive a touch input from a user; and a controller which according to a user's first touch input received in one of four edge regions of the touch pad corresponding to four edge regions of the screen, respectively, displays, on the picture, a first user interface (UI) of a function corresponding to the edge region in which the user's first touch input is received, of functions allocated for the four edge regions of the screen, and performs the function corresponding to the edge region in which the user's first touch input is received.

The functions may include at least one of channel selection, volume control, function setting and media contents playback.

The controller may display the first UI when the user's first touch input is received, and hide the first UI from the picture when the user's first touch input ends.

The user input unit may further include a switch part to receive a user's click input in one of the four edge regions of the touch pad, and, upon receiving the user's click input, the controller may display a second UI of a function corresponding to the edge region in which the user's click input is received.

The controller may display a third UI produced by activation of the second UI in response to a user's second touch input under a state where the user's click input is received.

The second UI may include guide information on at least one of the corresponding function and the user's second touch input.

The user input unit may further include a group of buttons to receive a user's input, and, upon receiving the user's input through the group of buttons during display of the second UI and the third UI, the controller may hide at least one of the second UI and the third UI out of the screen.

The foregoing and/or other aspects may be achieved by providing a control method of a display apparatus which displays an image on a screen based on an image signal, including: receiving a user's first touch input in one of four edge regions of a touch pad of a user input unit corresponding to four edge regions of the screen, respectively; displaying a first UI of a function corresponding to the edge region in which the user's first touch input is received, of functions allocated for the four edge regions of the screen; and performing the function corresponding to the edge region in which the user's first touch input is received.

The functions may include at least one of channel selection, volume control, function setting and media contents playback.

The displaying may include displaying the first UI until the user's first touch input ends after the user's first touch input is started.

The control method may further include: receiving a user's click input in one of the four edge regions of the touch pad; and, upon receiving the user's click input, displaying a second UI of a function corresponding to the edge region in which the user's click input is received.

The control method may further include: receiving a user's second touch input under a state where the user's click input is received; and displaying a third UI produced by activation of the second UI on the screen in response to the user's second touch input.

The second UI may include guide information on at least one of the corresponding function and the user's second touch input.

The control method may further include: receiving a user's input through a group of buttons of the user input unit; and, upon receiving the user's input through the group of buttons, hiding at least one of the second UI and the third UI out of the screen.

According to an exemplary embodiment, it is possible for a user to use functions of the display apparatus more conveniently by simplifying a user interface of the display apparatus.

The above and/or other aspects will become apparent and more readily appreciated from the following description of the exemplary embodiments, taken in conjunction with the accompanying drawings, in which:
FIG. 1 is a block diagram showing a configuration of a display apparatus according to an exemplary embodiment;
FIG. 2 is a view showing one example of a picture displayed on a display unit shown in FIG. 1;
FIGs. 3 and 4 are views showing one example of a user input unit shown in FIG. 1;
FIG. 5 is a flow chart showing a control method of the display apparatus shown in FIG. 1;
FIGs. 6 to 8 are views showing examples of a UI corresponding to an input of a user;
FIGs. 9 to 12 are views showing examples of a UI corresponding to a click input and a touch input of a user.

Below, exemplary embodiments will be described in detail with reference to accompanying drawings so as to be easily realized by a person having ordinary knowledge in the art.

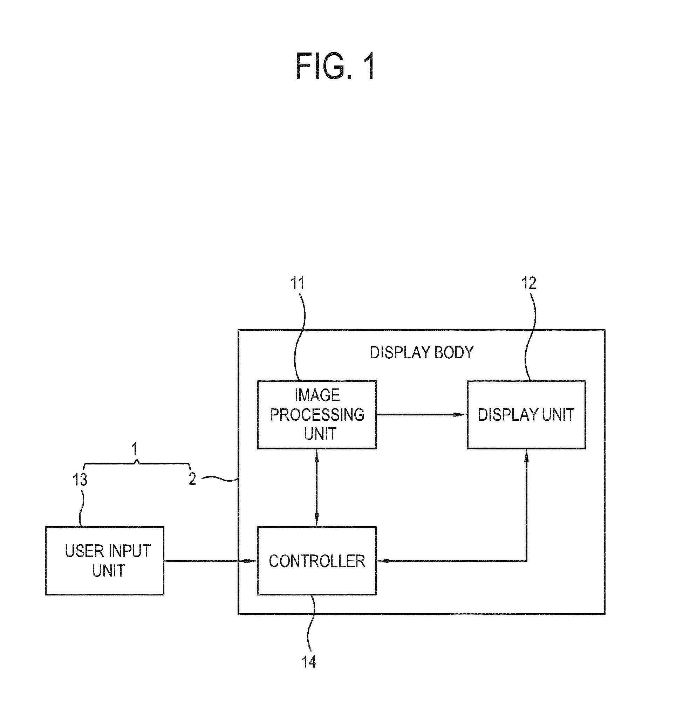

FIG. 1 is a block diagram showing a configuration of a display apparatus according to an exemplary embodiment. A display apparatus 1 may be implemented with a TV and may include an image processing unit 11, a display unit 12, a user input unit 13 and a controller 14.

The image processing unit 11 processes an image signal so that it can be displayed on the display unit 12. The image signal may include a TV broadcasting signal and the display apparatus 1 may further include a signal receiving unit (not shown) which receives the image signal. In addition, the image signal may be input from external devices such as a personal computer (PC), an audio/video (A/V) device, a smart phone, a smart pad and so on. In this case, the display apparatus 1 may further include a signal input unit (not shown) which receives the image signal from the external devices. In addition, the image signal may be attributed to data received via a network such as Internet. In this case, the display apparatus 1 may further include a network communication unit (not shown) which conducts communication via the network. In addition, the image signal may be attributed to data stored in a non-volatile storage unit such as a flash memory, a hard disk or the like. In this case, the display apparatus 1 may further include a non-volatile storage unit (not shown) or a connector to which an external non-volatile storage unit is connected.

The display unit 12 displays an image based on the image signal processed by the image processing unit 11. A method of displaying the image on the display unit 12 is not particularly limited but may include, for example, a display method of LCD, OLED or the like.

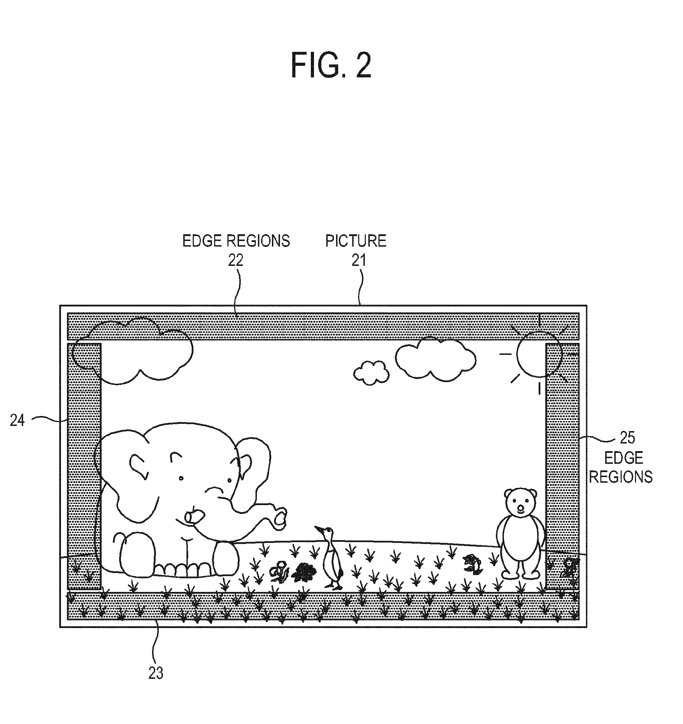

The image processing unit 11 performs image processing to display a user interface (UI) to allow a user to use functions of the display apparatus 1. FIG. 2 is a view showing one example of a picture 21 displayed on the display unit 12. As shown in FIG. 2, the UI related to the functions of the display apparatus 1 may be provided in each of four edge regions 22, 23, 24 and 25 of the picture 21 of the display unit 12.

A plurality of functions of the display apparatus 1 may be categorized and classified. For example, categories of functions of the display apparatus 1 may include channel selection, volume control, function setting, media contents playback and so on. One function category may be allocated for each of the four edge regions 22, 23, 24 and 25 of the picture 21.

The user input unit 13 receives an input from a user and transmits the input to the controller 14. The image processing unit 11, the display unit 12 and the controller 14 are provided in a display body 2 which is an exterior case and the user input unit 13 may be a remote controller which is provided separately from the display body 2. Thus, the user may use the user input unit 13 to operate the functions of the display apparatus remotely. A method of transmitting the input from the user to the controller 14 is not particularly limited but may include infrared communication, radio frequency (RF) communication or the like. In this case, the display apparatus 1 may further include a user input receiving unit (not shown) which receives a signal corresponding to the user's input received from the user input unit 13 and transmits the input to the controller 14.

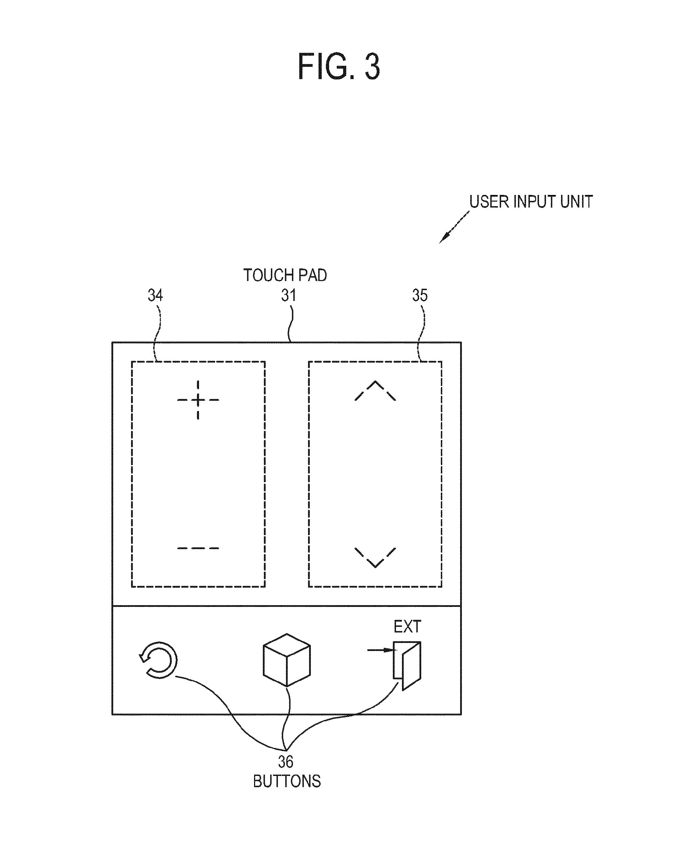

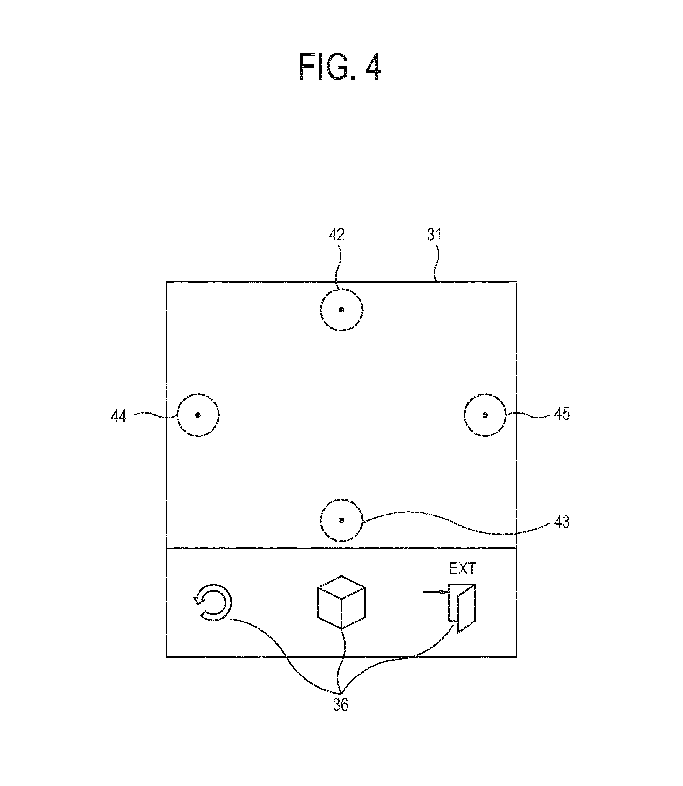

The user input unit 13 may include a touch pad which receives a touch input of a user. FIGs. 3 and 4 are views showing one example of the user input unit 13. The user input unit 13 includes a touch pad 31 which receives a touch input of a user. The touch input of the user may be diverse, including tap, drag, slide, gesture and so on.

Four edge regions of the touch pad 31 correspond to the four edge regions 22, 23, 24 and 25 of the picture 21. For example, as shown in FIG. 3, left and right edge regions 34 and 35 of the touch pad 31 may correspond to the left and right edge regions 24 and 25 of the picture 21, respectively. As another example, as shown in FIG. 4, top, bottom, left and right edge regions 42, 43, 44 and 45 of the touch pad 31 may correspond to the top, bottom, left and right edge regions 22, 23, 24 and 25 of the picture 21, respectively.

The touch pad 31 may receive a click input of a user. The touch pad 31 may include a switch unit (not shown) which can receive the click input of the user in each of the four edge regions 42, 43, 44 and 45.

The controller 14 controls the entire operation of the display apparatus 1. The controller 14 controls the image processing unit 11 to display an image on the display unit 12 based on an image signal. The controller 14 also controls the image processing unit 11 to display a UI to allow a user to use the functions of the display apparatus 1. Upon receiving a user's input through the user input unit 13, the controller 14 controls the image processing unit 11 to display the UI in response to the received user's input.

The controller 14 also performs control such that a particular function of the display apparatus 1 is performed in response to a user's input, which will be described later.

Although not shown, the controller 14 may include a non-volatile memory which stores control programs to enable the above-described control operation, a volatile memory into which at least some of the stored control programs are loaded, and a microprocessor which executes the loaded control programs.

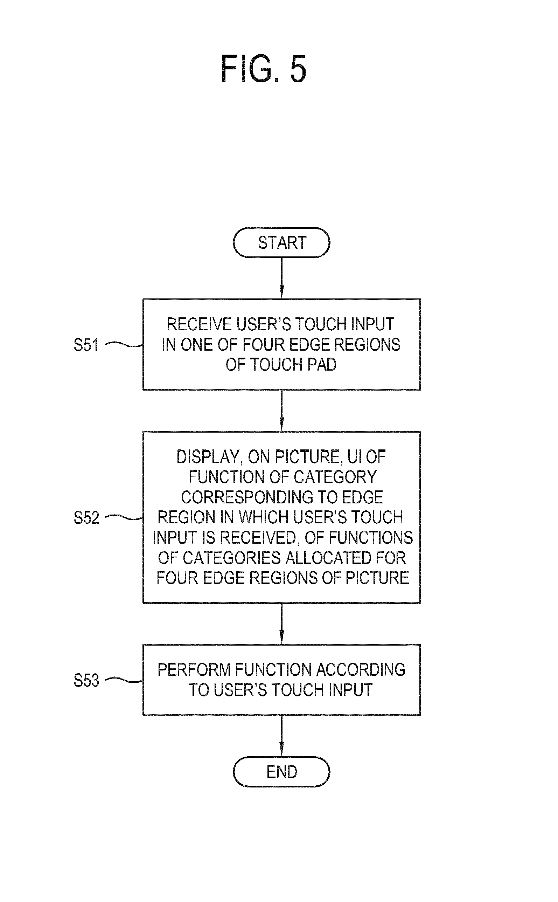

FIG. 5 is a flow chart showing a control method of the display apparatus 1. First, in operation S51, the display apparatus 1 receives a user's touch input in one of the four edge regions of the touch pad 31 of the user input unit 13. For example, the user's touch input may be received in one of the left and right edge regions 34 and 35 of the touch pad 31, as shown in FIG. 3, or one of the top, bottom, left and right edge regions 42, 43, 44 and 45 of the touch pad 31, as shown in FIG. 4.

In operation S52, the display apparatus 1 displays, on the picture 21, a UI of a function of a category corresponding to an edge region of the touch pad 31 in which the user's touch input is received, of the functions of categories allocated for the four edge regions 22, 23, 24 and 25 of the picture 21. Next, in operation S53, the display apparatus 1 performs the function corresponding to the user's touch input.

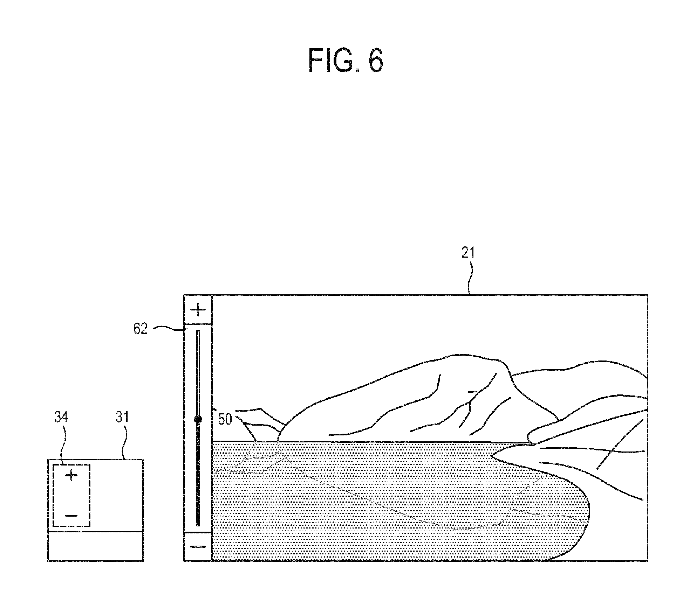

FIGs. 6 to 8 are views showing examples of the UI corresponding to the user's touch input. First, referring to FIG. 6, when a user touches the left edge region 34 of the touch pad 31, a UI 62 of a function of a corresponding category may be displayed on the left edge region of the picture 21. The corresponding category function may be a volume control function. The user may continue to perform operation for volume control in the left edge region 34 of the touch pad 31. For example, the user may increase a volume by touching an upper part (a portion indicated by'+') of the left edge region 34 or decrease the volume by touching a lower part (a portion indicated by'-') of the left edge region 34. In this case, the touch input may be a slide input as well as a simple touch input. The display apparatus 1 displays the UI 62 reactively in response to the touch input for volume control. For example, for volume increase, a state bar indicating a degree of current volume of the UI 62 or a numerical number indicating a degree of volume may be changed correspondingly. The display apparatus 1 performs a corresponding function, for example, the volume control, in response to the user's touch input. If it is determined that the user's touch input ends, the display apparatus 1 may no longer display the UI 62 on the picture 21.

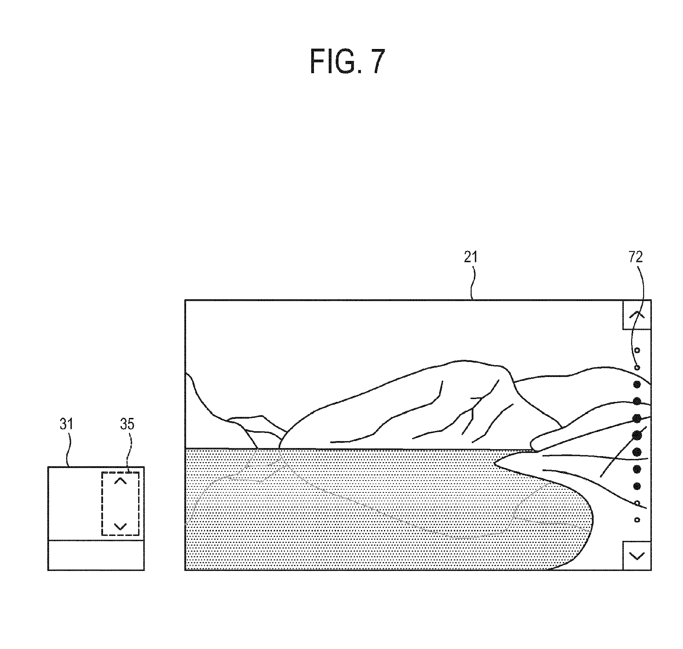

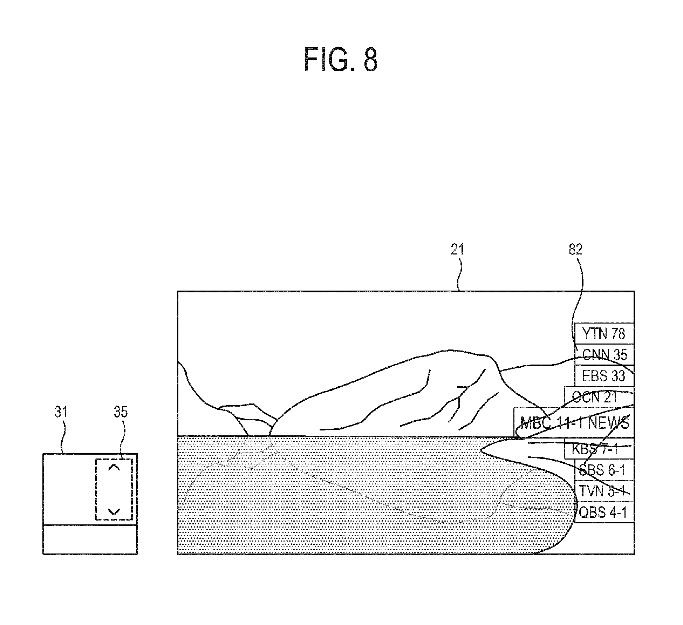

As another example, referring to FIG. 7, when the user touches the right edge region 35 of the touch pad 31, a UI 72 of a function of a corresponding category may be displayed on the right edge region of the picture 21. The corresponding category function may be a channel control function. The user may continue to perform operation for channel control in the right edge region 35 of the touch pad 31. For example, the user may increase a channel by touching an upper part of the right edge region 35 of the touch pad 31 or decrease the channel by touching a lower part of the right edge region 35. Also in this case, the touch input may be a slide input as well as a simple touch input. The display apparatus 1 performs a corresponding function, for example, the channel control, in response to the user's touch input. If it is determined that the user's touch input ends, the display apparatus 1 may no longer display the UI 72 on the picture 21. FIG. 8 shows another example 82 of a UI showing a channel control category function.

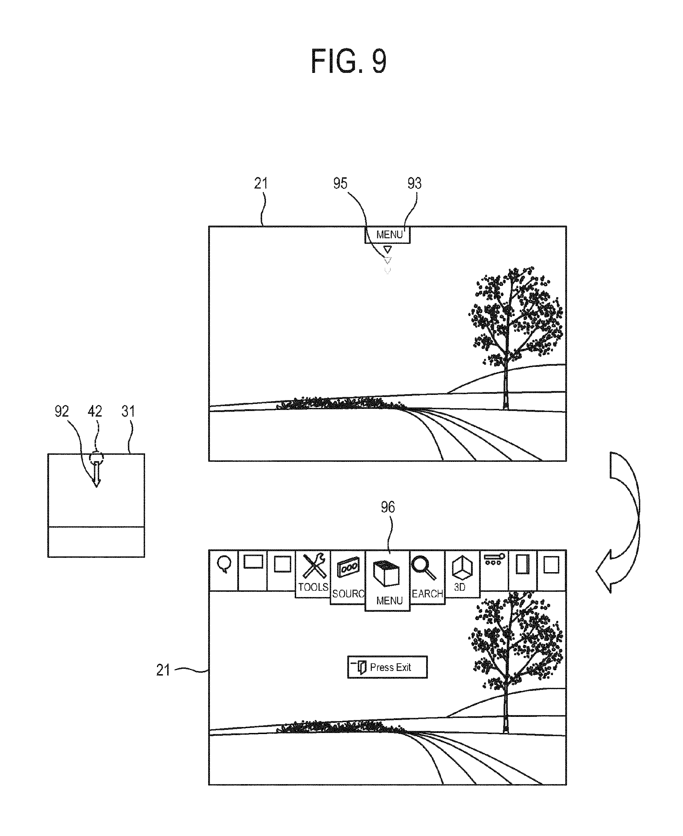

FIGs. 9 to 12 are views showing examples of a UI corresponding to a click input and a touch input of a user. First, referring to FIG. 9, when the user clicks on the top edge region 42 of the touch pad 31, a guide UI 93 of a function of a corresponding category may be displayed on the top edge region of the picture 21. The corresponding category function may be a menu setting function. The guide UI 93 may contain information (see 'MENU') for guiding contents of a function to be provided to allow the user to know what function to be provided next. Subsequently, with the top edge region 42 of the touch pad 31 clicked on, the user may continue to drag the top edge region 42 downward for touch input. The display apparatus 1 displays a main UI 96 related to menu setting in response to such a touch input. In addition, when the user clicks on the top edge region 42 of the touch pad 31, the display apparatus 1 may further display a guide UI 95 indicating directional information to guide subsequent effective operation.

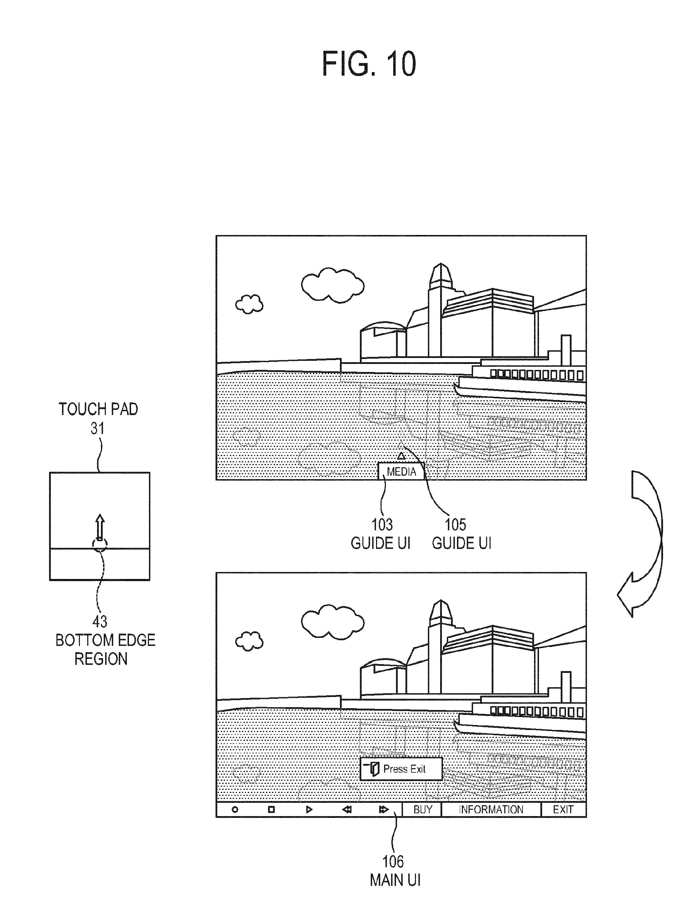

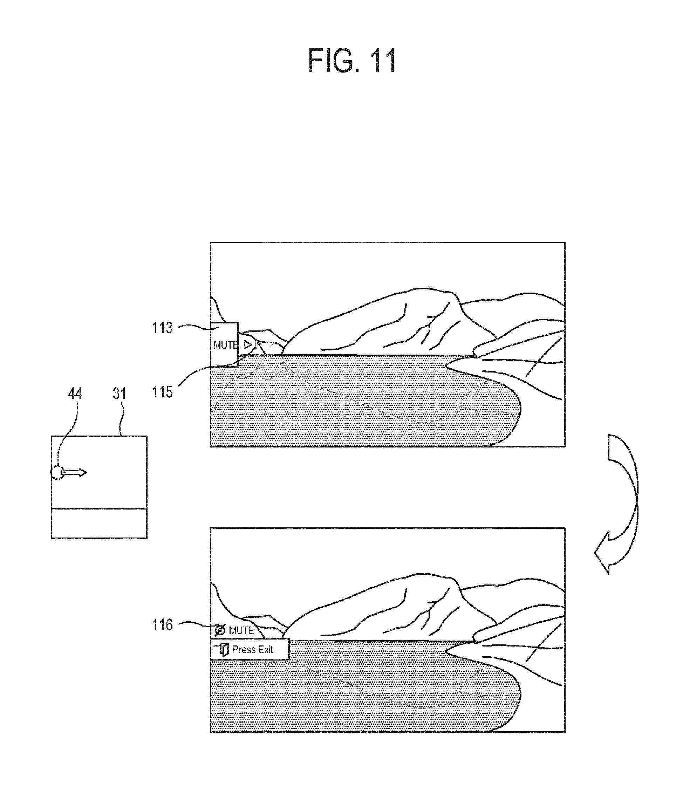

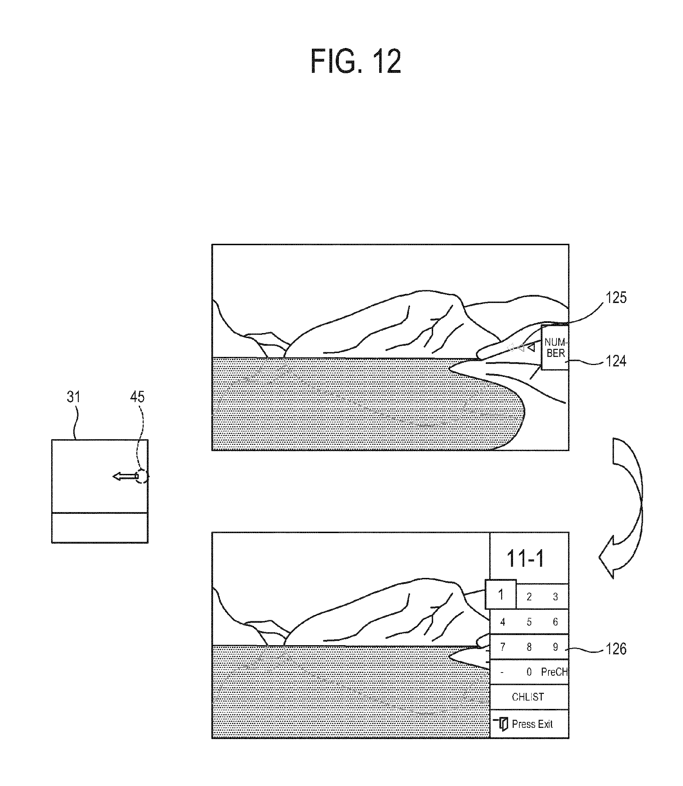

FIGs. 10 to 12 show several examples of the UI corresponding to the click input and the touch input of the user. FIG. 10 shows an example of the click input and the touch input in the bottom edge region 43 of the touch pad 31. A function of a corresponding category is a multimedia function and guide UIs 103 and 105 and a main UI 106 are displayed depending on the click input and the touch input. FIG. 11 shows an example of the click input and the touch input in the left edge region 44 of the touch pad 31. A function of a corresponding category is a volume mute function and guide UIs 113 and 115 and a main UI 116 are displayed depending on the click input and the touch input. FIG. 12 shows an example of the click input and the touch input in the right edge region 45 of the touch pad 31. A function of a corresponding category is a channel control function using a number and guide UIs 123 and 125 and a main UI 126 are displayed depending on the click input and the touch input.

As described above, the display apparatus 1 allows a user to operate and use functions of the display apparatus 1 intuitively, resulting in improvement in user's convenience.

The user input unit 13 may further include a group of buttons to receive a user's input. As shown in FIGs. 3 and 4, the user input unit 13 may include one or more buttons 36 in the lower part of the touch pad 31. The group of buttons 36 may be of a hardware type or a touch type. As shown in FIG. 9 and so on, if there is an input of a button 36 while the main UI 96 is displayed on the picture 21, the display apparatus 1 may no longer display the main UI 96 on the picture 21.

Although a few exemplary embodiments have been shown and described, it will be appreciated by those skilled in the art that changes may be made in these exemplary embodiments without departing from the invention, the scope of which is defined in the appended claims. For example, although it has been illustrated in the above embodiments that the display apparatus 1 employs a configuration to receive a broadcasting signal, that is, incorporates a so-called set-top box (not shown), the present aspects are not limited thereto but it should be understood that the set-top box may be separated from the display apparatus 1. That is, whether the display apparatus is implemented integrally or separately is just optional in design without having an effect on the scope of the invention.

## Claims

1. A display apparatus comprising:
an image processing unit which processes an image signal;
a display unit which displays an image on a screen based on the image signal;
a user input unit which includes a touch pad to receive a touch input from a user; and
a controller which, upon receiving a first touch input from the user in one of four edge regions of the touch pad which respectively correspond to four edge regions of the screen, displays a first user interface (UI) of a function corresponding to the edge region in which the first touch input is received, of functions allocated for the four edge regions of the screen, and performs the function corresponding to the edge region in which the first touch input is received.

2. The display apparatus according to claim 1, wherein the functions include at least one of channel selection, volume control, function setting and media contents playback.

3. The display apparatus according to claim 1 or 2, wherein the controller displays the first UI when the first touch input is received, and hides the first UI after a predetermined amount of time if no other touch input from the user is received.

4. The display apparatus according to one of claims 1 to 3, wherein the user input unit further includes a switch part to receive a click input from the user in one of the four edge regions of the touch pad, and
wherein, upon receiving the click input, the controller displays a second UI of a function corresponding to the edge region in which the click input is received.

5. The display apparatus according to claim 4, wherein the controller displays a third UI produced by activation of the second UI in response to a second touch input from the user after the click input is received.

6. The display apparatus according to claim 5, wherein the second UI includes guide information of the corresponding function and the second touch input.

7. The display apparatus according to claim 5, wherein the user input unit further includes a group of buttons to receive an input from the user, and
wherein, upon receiving the input from the user through the group of buttons during display of the second UI and the third UI, the controller hides at least one of the second UI and the third UI from the screen.

8. A control method of a display apparatus which displays an image on a screen based on an image signal, comprising:
receiving a first touch input from a user in one of four edge regions of a touch pad of a user input unit corresponding to four edge regions of the screen, respectively;
displaying a first user interface (UI) of a function corresponding to the edge region in which the first touch input is received, of functions allocated for the four edge regions of the screen; and
performing the function corresponding to the edge region in which the first touch input is received.

9. The control method according to claim 8, wherein the functions include at least one of channel selection, volume control, function setting and media contents playback.

10. The control method according to claim 8 or 9, wherein the displaying includes displaying the first UI for a predetermined amount of time after the first touch input ends.

11. The control method according to one of claims 8 to 10, further comprising:
receiving a click input from the user in one of the four edge regions of the touch pad; and
upon receiving the click input, displaying a second UI of a function corresponding to the edge region in which the click input is received.

12. The control method according to claim 11, further comprising:
receiving a second touch input from the user after the click input is received;
and
displaying a third UI produced by activation of the second UI on the screen in response to the second touch input.

13. The control method according to claim 12, wherein the second UI includes guide information on at least one of the corresponding function and the second touch input.

14. The control method according to claim 12, further comprising:
receiving an input from the user through a group of buttons of the user input unit; and
upon receiving the input through the group of buttons, hiding at least one of the second UI and the third UI from the screen.
